# EUROPEAN PATENT APPLICATION

(11) **EP 1 225 521 A2**
(43) Date of publication of application: **24.07.2002**
(21) Application number: 02000822.3
(22) Date of filing: 14.01.2002
(51) Int. Cl.: G06F 17/30

(54) **Method and apparatus for providing application integration on a web browser**

(30) Priority: 22.01.2001 US 767324
(71) Applicant: Openwave Systems Inc., Redwood City, CA 94063 (US)
(72) Inventor: Rossmann, Alain S., Palo Alto, CA 94303 (US); Martin, Bruce K., Jr., Palo Alto, CA 94306 (US)
(74) Representative: Jehle, Volker Armin

(57) **Abstract**

The present invention includes a system and method of processing a web page. The method includes receiving a web page having a number of data elements. Each one of the data elements is classified into at least one of a number of known data types. A number of related operations are determined for each one of the classified data elements. The related operations are then output. For another embodiment, the data is extracted from each one of the classified data elements in the web page. The extracted data is then output to a selected one or more of the related operations. The selected related operation then processes the extracted data. For another embodiment, at least one of the related operations is promoted over the other, non-promoted, related operations.

## Description

### FIELD OF THE INVENTION

The present invention is related to Internet software and more specifically to web browser software applications.

### BACKGROUND OF THE INVENTION

Current Internet browser models often require a user to select from multiple layers of hyper-linked pages, websites, text pages and menus to "drill down" from a start or home page to a desired page of information. Alternatively, a user can use search engines to search for a desired page, or manually enter an address of a desired page, or rely on a list of bookmarks or favorite pages. As will be described below, each of these approaches require considerable data entry by the user. Further, in some platforms such as personal digital assistants (PDAs), handheld computing devices, two-way pagers, and web enabled telephones, the user interface is limited in size and capability such that entering the above described data entry requirement is burdensome and impractical.

User terminals used to access the Internet (or Intranets) generally have several features in common, whether the user terminal sits on a desktop or is held in the palm of a hand. One common feature is that the user terminals can be used to display web pages. Personal computers and network servers use standard web protocols, e.g. hyper-text transfer protocol (HTTP), and markup languages, e.g. hyper-text mark-up language (HTML), to accomplish this task. Mobile devices use wireless protocols, e.g. Wireless Access Protocol (WAP) or Handheld Device Transport protocol (HDTP) and wireless markup languages, e.g. Wireless Markup Language (WML) and Handheld Device Markup Language (HDML), to accomplish the same task.

A personal computer including the standard web protocols (e.g. HTTP), markup languages (e.g. HTML), and operating systems allows for multiple pages to be displayed simultaneously. Displaying multiple pages allows the user to more easily navigate through multiple web pages in the Internet (or Intranet) because the user can select and paste data from one page or application to another. However, when using small, palm-sized devices such as web enabled telephones, pagers, PDAs, etc., the limited user interface does not allow easy display or use of multiple pages.

One prior art approach to easing the navigating burden described above is to use a related links process. The related links process manually links applications, pages and information related to the data elements on each displayed page. The related links process is a predetermined process. That is, at some time prior to a user viewing or displaying the page, the developer of the related link process for that displayed page, manually defines the URLs that the developer decides are related to the data elements on displayed page. When a user views the displayed page, the user can select a related link, if the developer has assigned a related link to a particular entry on the displayed page. Selecting the related link causes the information in the corresponding type of data to be exported to the related application or page of information.

A search engine is a typical example of a related link included in the list by the related link developer. For example: A user views a page relating to baseball scores from the previous day's games. A particular baseball team is named. The user selects the team name and, because the team name is a noun data type, then a predetermined list of related links for noun data types is displayed. One of the related links is an Internet search engine, e.g. Google, Excite, Infoseek, etc. When the user selects Google, the information corresponding to the data type noun, e.g. the selected team name is exported to Google and a Google search using the team name as the input, is automatically initiated. The next page displayed to the user is a page listing the Google search results.

Unfortunately, the related links concept only links the pages and applications that are selected, in advance, by the related link developer or operator. The related links process is also limited to being linked only to pages where the related link developer is knowledgeable of the content of both the displayed page and the linked page so that the developer can ensure that the related links function properly. As a result of this requirement, the related links process is typically proprietary in nature and very limited. For example, a specific web portal, such as Yahoo, would know all the pages and links maintained on the Yahoo system. Therefore, Yahoo would select which particular "related" pages and applications to link together. This limitation results in the related links process not being substantially or practically scalable across many web pages, applications, etc.

Another shortfall of the related links process is that it is a manual process, requiring a related link developer to manually assign related links to the data elements on a displayed page. This results in fewer related links for the user to use. Further, the user is not able to manage or control the links that are related to a given page or a given data type.

Another prior art approach to easing the navigating burden described above is to present the user with a fixed menu containing a common set of operations for all displayed pages. For example, an email application might include functions such as: add the sender of the email to your address book, lookup the sender in the phone book, access another application to place a telephone call to the sender, etc. A fixed menu approach is limited to only a very small set of choices. Further, the user must use only applications that are known to the displayed page or application. When the user elects to use a phone book or personal information manager (PIM) that is not known to the displayed page or application, the fixed menu cannot properly access the correct information and operations in the PIM/phone book. While this fixed menu approach does provide access to a limited number of operations, the fixed menu is limited similarly to the related links above in that the developer of the fixed menu determines the options available on the menu. As the developer adds additional supported applications and functions to make the fixed menu applicable to more web pages and applications, the fixed menu becomes too large and difficult to navigate and the navigating burden on the user begins to rise yet again.

### SUMMARY OF THE INVENTION

The present invention includes a system and method of processing a web page. The method includes receiving a web page having a number of data elements. Each one of the data elements is classified into at least one of a number of known data types. A number of related operations are determined for each one of the classified data elements . The related operations are then output. For another embodiment, the data is extracted from each one of the classified data elements in the web page. The extracted data is then output to a selected one or more of the related operations. The selected related operation then processes the extracted data. For another embodiment, at least one of the related operations is promoted over the other, non-promoted, related operations.

Other features and advantages of the present invention will be apparent from the accompanying drawings and from the detailed description that follows.

### BRIEF DESCRIPTION OF THE DRAWINGS

The present invention is illustrated by way of example and not limitation in the figures of the accompanying drawings in which like references indicate similar elements:
Fig. 1 illustrates a wireless device used as a mobile user terminal;
Fig. 2 illustrates a functional block representation of a mobile user terminal browser window;
Fig. 3 illustrates a network environment in which a wireless device may be used to access content on the Internet;
Fig. 4 is a block diagram of the wireless device;
Fig. 5 is a block diagram of a computer system that may represent one or more of the servers in Fig. 3;
Fig. 6 illustrates a flow chart of processing a web page in accordance with one embodiment; and
Fig. 7 illustrates a functional block representation of a system executing a related operation of one embodiment.

### DETAILED DESCRIPTION

A system and method of processing a web page and determining operations related to the content of the web page is disclosed. As will be described in more detail below, the method can be summarized as follows: A web page having a number of data elements is received in a user terminal or a server. The user terminal and/or the server classify each of the data elements into known data types. The user terminal or the server then accesses a database containing the known data types and corresponding related operations, to determine a number of related operations that correspond to each one of the known data types. The related operations are displayed to the user when the user selects one data element of the corresponding data type in the web page. When one of the related operations is selected, the user terminal or the server extracts the data from the selected data entry. The extracted data is then output to the selected related operation. The selected related operation is then executed, processes the extracted data and outputs the results. The selected related operation can be executed on the user terminal, the server or a second server.

One embodiment provides an easier to use method and system for processing a web page by identifying operations that are related to the content of the web page. The method can be performed on any type of web-enabled device or platform used for processing or displaying web pages. As will be described in more detail below, the method provides the greatest advantages to a web enabled devices having a limited user interface including, but not limited to: a handheld computing device (e.g. a personal digital assistant (PDA)), a telephone, a cellular telephone, a two-way pager. The method also provides advantages to other web-enabled devices that are not limited by the user interface or other limited capabilities such as, but not limited to, a personal computer or a network server.

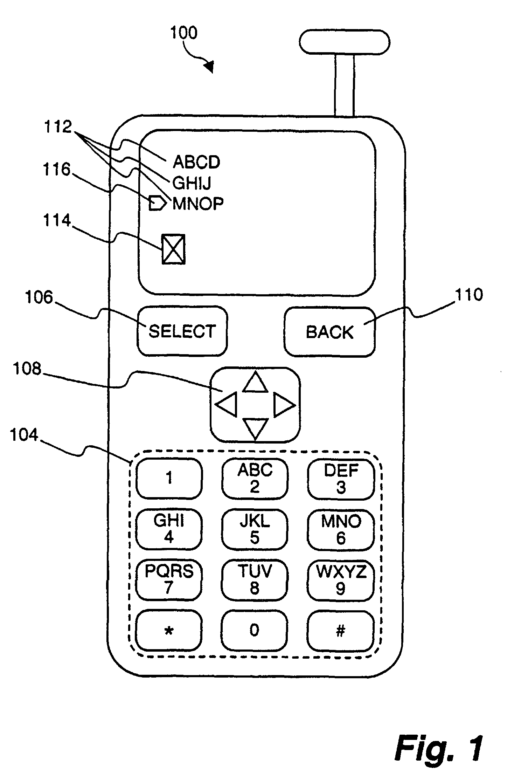

Fig. 1 illustrates one example of a web-enabled cellular telephone 100 that can be used as a mobile user terminal to access a desired web page on the Internet. The web-enabled cellular telephone 100 includes a display screen 102, an alphanumeric keypad 104 and navigational buttons 106, 108, 110. As shown, the display screen 102 displays a page of information. The page includes data elements such as text 112 or an icon 114 and a cursor 116. Each one of the data elements 112, 114 on the displayed page, is typically a link or hyperlink to another page of information or an address or phone number or other data. The data elements 112, 114 can alternatively link to applications such as email or a phonebook or an addressbook or other applications. The alphanumerical keypad 104 includes several keys for data entry. The navigation buttons 106, 108, 110 include a select button 106, a cursor movement button 108 and a back navigational button 110. The cursor movement button 108 allows a user to move the cursor 116 from one text entry 112 or icon 114 to the next. The select button 106 activates the selected the text entry 112 or icon 114 that was selected by the cursor 116. The back navigational button 110 causes a page that was displayed immediately before the currently displayed page to be displayed on the screen 102.

One problem associated with using mobile devices such as shown in Fig. 1, to access the Internet (or Intranets) is related to the lack of user-friendliness of the user interface associated with such devices. Typically, mobile devices have compact keypads with few keys (e.g. 10-24 keys) and small size, reduced resolution, monochrome or limited color displays. Further, mobile devices communicate using wireless channels that typically have only a fraction of the speed and capacity of the communication channels used by personal computers to access to the Internet (or an Intranet) or other networks. These restrictions exist because the mobile devices must be able to fit into the palm of hand and must be relatively inexpensive.

For a user terminal to gain a wide spread use, the user terminal must meet the needs of the intended users. Specifically, any interface used to interact with the Internet (or Intranets) must be interactive and easy to use. Users expect to be able to easily access information and users expect the accessed information to be presented in an efficient manner, which leverages the resident computing power of the user terminal and the network computers.

Accessing for information on the Internet (or Intranets) generally requires the user to know the location (e.g. a Uniform Resource Locator) for the desired information or to utilize a search engine to access the desired information. Quite frequently the desired information may be distributed across more than one web page. This requires the user to enter the URL for each web page to access the desired information. For example, if a user is making travel arrangements he will access a first page to find a flight, then a second page to purchase the tickets, a third page to reserve a hotel, a fourth page for rental cars, etc. Accessing multiple pages is not a difficult task using a desktop computer or laptop computer, but performing this same task with a mobile device can be considerably more difficult.

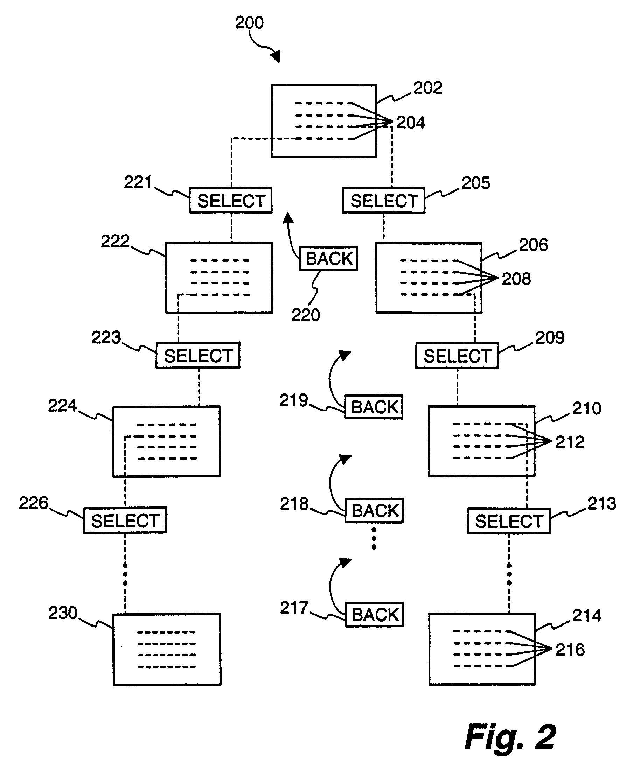

Fig. 2 illustrates a functional block representation of a mobile user terminal browser window. The mobile device browser window displays a starting text page 202 (home page) with a text list 204. Typically each entry in the text list represents another page such as page 206 that is hyper-linked to the displayed page. A user can only then view the data elements 208 on the page 206 then select 209 one of the data elements 208 on the page 206, which will cause another hyper-linked page 210 to be displayed. The process can continue until a page 214 containing the information 216 desired by the user is displayed. Once the user has retrieved the desired information, the user may wish to act on that information. For example the user might perform the following actions:
1. The user drills down from his home page 202 to a favorite weather site 206.
2. The user then selects a geographical region-select weather page 210.
3. The user then selects a European regional page (not shown).
4. The user then selects Spain on a European country select page (not shown).
5. The user then selects Seville on a page displaying a list of cities in Spain (not shown). The desired page, Seville's current weather page 214, is then displayed.

After viewing Seville's current weather and possibly additional pages of forecast weather or other information about Seville, the user decides he would like to travel to Seville for a few days. The user then reverses course and backs up 5 pages (or more) to return to his home page 202. Mobile devices typically include a "back" button to expedite backward navigating (back buttons 217, 218, 219, 220). The user then drills downward in a second direction 222-230 to his desired Internet travel page 230, three or more pages down from his home page. In the above example the user was required to navigate down five pages (or more) to find the desired information - the weather in Seville, Spain, and then back up five pages (or more) and then down another direction three or more pages to begin planning his travel. Often, the user must manually enter access data, e.g. a URL, if the desired data cannot be accessed by the links listed on a given page. Finally, once the user arrives at his desired travel page 230, the user must then manually enter his destination (Seville), the travel dates, his personal information (name, address, contact information, payment information, etc.).

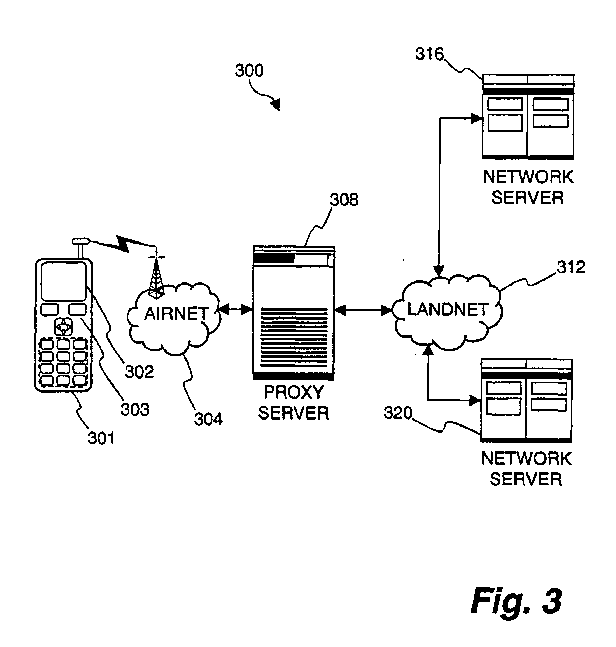

Fig. 3 shows a network environment in which a wireless communication device (or simply "wireless device"), such as described in Fig. 1 above, can be used. Wireless device 300 may be of any of the types of wireless devices mentioned above, such as a wireless telephone. To facilitate explanation, the example of a wireless telephone is used at various points in the following description. As described herein, wireless device 301 is enabled to receive remotely stored hypermedia information, such as Wireless Markup Language (WML) documents, HTML documents, Compact HTML (cHTML) documents, Extensible Markup Language (XML) documents, or Handheld Device Markup Language (HDML) documents, from one or more network servers, shown as network servers 316 and 320. Network Servers 316 and 320 may be, for example, conventional personal computers (PCs) or computer workstations. Wireless device 301 has a display 302 and a keypad 303. The wireless device 301 can include a microbrowser capable of accessing and displaying hypermedia content, such as WML cards, HTML pages, or the like.

The communication path between wireless device 301 and network servers 316 and 320 includes a wireless communication network ("airnet") 304, a proxy server 308, and a land-based network ("landnet") 312. Airnet 304 is a network such as a Cellular Digital Packet Data (CDPD) network, a Global System for Mobile (GSM) network, a Code Division Multiple Access (CDMA) network, or a Time Division Multiple Access Network (TDMA) network. The communications protocols used by airnet 304 may include, for example, WAP, HDTP, Transmission Control Protocol (TCP/IP), HTTP, and/or SSL+ HTTP (HTTP over secure sockets layer (SSL)). Landnet 312 is a land-based network that may be or include the Internet, an intranet, or a data network of any private network, such as a Local Area Network (LAN). The communication protocol supporting landnet 312 may be, for example, TCP/IP, HITP, or HTTP over SSL.

Proxy server 308 acts as a bridge between airnet 304 and landnet 312. Proxy server 308 may be, for example, a conventional computer workstation or PC. Although shown as a physically separate device, proxy server 308 may be implemented in a network server (e.g. network servers 316 or 320) with hardware and software such as well known in the art providing the connection between airnet 304 and landnet 312. Proxy server 308 can be substantially the same as network servers 316 and 320, except that it also includes features of the present invention described herein.

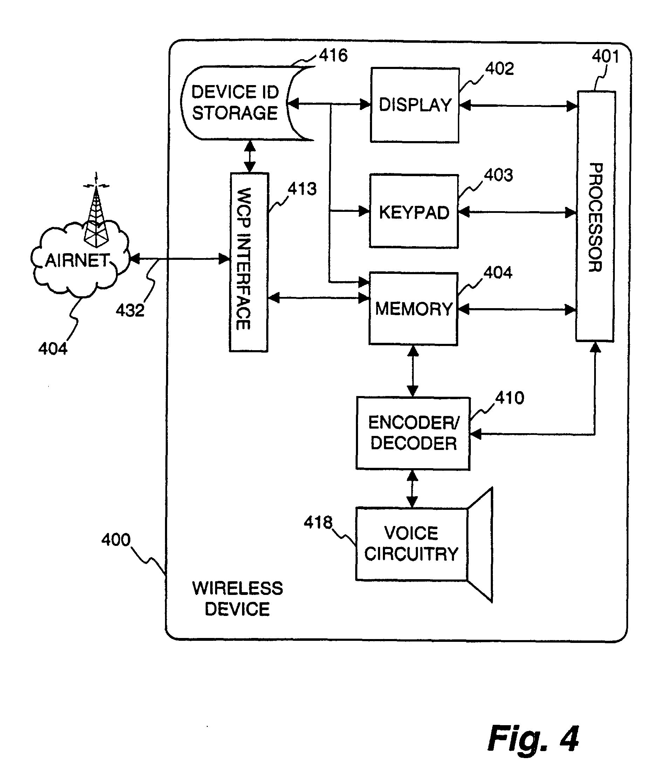

Figure 4 is a block diagram showing the principle components of wireless device 400, according to one embodiment. The wireless device 400 includes a processor 401, which may be or may include any of: a general or special purpose programmable microprocessor, Digital Signal Processor (DSP), Application Specific Integrated Circuit (ASIC), Programmable Logic Array (PLA), Field Programmable Gate Array (FPGA), etc., or a combination thereof. Wireless device 400 includes a Wireless Control Protocol (WCP) interface 413 that couples to a carrier network via airnet 404 to receive incoming and outgoing signals. Device identifier (ID) storage 416 stores and supplies to WCP interface 413 a Mobile Device Identifier (MIN), which identifies wireless device 400 to outside entities (e.g. proxy server 308 a client, a server, or other network device). The MIN is a specific code that is associated with wireless device 400 and directly corresponds to a device ID in a user account typically provided in an associated proxy server, such as proxy server 308. If the proxy server services a number of wireless devices, there will be a number of such accounts, preferably kept in a database server, each of the accounts corresponding to a different one of the wireless devices.

In addition, wireless device 400 includes memory 404 that stores data and/or software for controlling and/or performing many of the processing tasks performed by wireless device 400. These tasks include: establishing a communication session with a proxy server via wireless link 432 and aimet 404; receiving user inputs from keypad 403, and displaying information on the display 402. Hence, memory 404 may represent one or more physical memory devices, which may include any type of Random Access Memory (RAM), read-only Memory (ROM) (which may be programmable), flash memory, non-volatile mass storage device, or a combination of such memory devices. Memory 404 is also coupled to WCP interface 413 for the establishment of a communication session and the requesting and receiving of data.

Assuming, for example, that wireless device is a telephone, wireless device 400 also includes voice circuitry 418 for inputting and outputting audio during a telephonic communication between the user of wireless device 400 and a remote party. Voice circuitry 418 may include, for example, sound transducers, analog-to-digital (A/D) and digital-to-analog (D/A) converters, filters, etc., such as are well-known in the art. An encoder/decoder 410 is coupled between the processor 401 and the voice circuitry 418 for encoding and decoding audio signals.

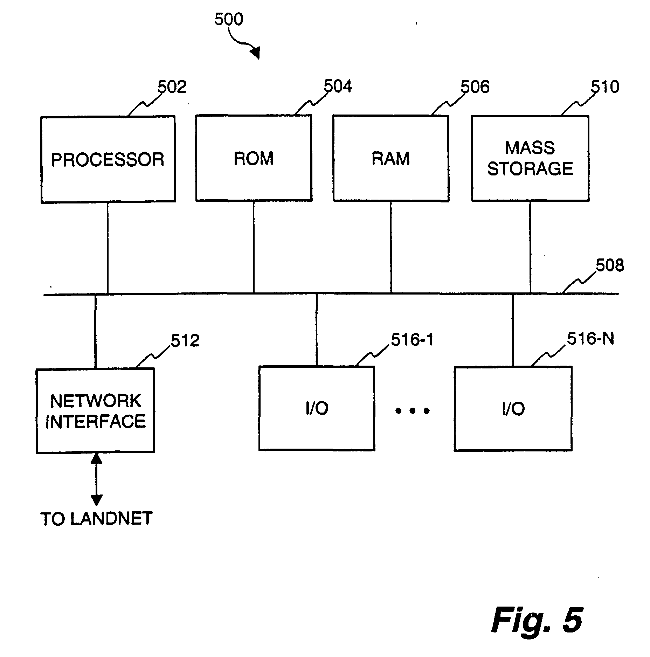

Figure 5 is a high-level block diagram of a computer system representative of any or all of the servers shown in Fig. 3, i.e., proxy server 308 and network servers 316 and 320. As shown, the computer system includes a processor 502, ROM 504, and RAM 506, each connected to a bus system 508. The bus system 508 may include one or more buses connected to each other through various bridges, controllers and/or adapters, such as are well-known in the art. For example, the bus system 508 may include a "system bus" that is connected through an adapter to one or more expansion buses, such as a Peripheral Component Interconnect (PCI) bus. Also coupled to the bus system 508 are a mass storage device 510, a network interface 512, and a number (N) of input/output (I/O) devices 516-1 through 516-N.

I/O devices 516-1 through 516-N may include, for example, a keyboard, a pointing device, a display device and/or other conventional I/O devices. Mass storage device 510 may include any suitable device for storing large volumes of data, such as a magnetic disk or tape, magneto-optical (MO) storage device, or any of various types of Digital Versatile Disk (DVD) or Compact Disk (CD) based storage.

Network interface 512 provides data communication between the computer system and other computer systems on the landnet 312. Hence, network interface 512 may be any device suitable for or enabling the computer system 500 to communicate data with a remote processing system over a data communication link, such as a conventional telephone modem, an Integrated Services Digital Network (ISDN) adapter, a Digital Subscriber Line (DSL) adapter, a cable modem, a satellite transceiver, an Ethernet adapter, or the like.

Of course, many variations upon the architecture shown in Fig. 5 can be made to suit the particular needs of a given system. Thus, certain components may be added to those shown in Fig. 5 for given system, or certain components shown in Fig. 5 may be omitted from the given system.

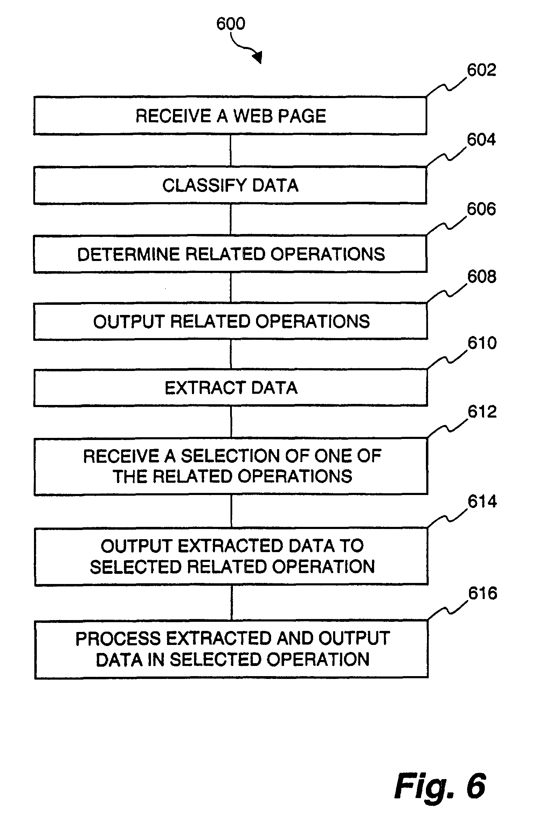

Fig. 6 illustrates one embodiment of a process 600 of processing a web page to determine related operations that are related to the data content of the web page. A user terminal or a network server or combinations thereof can perform the process 600. The network server can perform the process 600 in "real time" as the network server serves the web page to the user terminal. Alternatively, the network server can perform the process 600 at some time prior to the web page being served to the user terminal, e.g. processing a list of previously identified web pages or processing the web pages linked to the currently displayed page. The user terminal can perform the process 600, once the web page is received in the user terminal.

A brief description of processing a web page 600 follows, each portion of processing the web page 600 is described in more detail below. First, the web page is received at block 602 in the network server or the user terminal. The web page content includes numerous data elements, each data element can be classified into at least one of a number of known data types. Each one of the numerous data elements are classified into the known data types at block 604 according to a database of types of data. According to various alternate embodiments, the data can be explicitly classified or implicitly classified or combinations thereof. A number of related operations are determined for each one of the known data types at block 606. The related operations are then output or displayed to the user at block 608. For another embodiment, the data from each one of the known data types is extracted from the web page at block 610. At block 612, a user selects one or more of the related operations and the extracted data are then output to the selected related operation at block 614. The related operation then processes the extracted data at block 616.

If, for example, a travel planning web page is received in a user terminal, such as a mobile device described above. The web page can include various data types such as: origin, destination, dates, airline, rental car company, hotel, locations of various airports, hotels, parts of speech (e.g. noun, verb, article, etc.), persons, place, time, date, address, phone number, etc. In addition, the user inputs his personal information, such as name(s) of travelers, payment methods, ages, etc. For another example, an email is received in the user terminal. The email can include various data types such as, persons (e.g. a sender, a receiver, and other addressees) and the various persons' respective email addresses. An email can also include various data types within the body of the email and in attachments to the email that are readily identified such as: address, phone number (e-card or v-card data) and other data types. Each instance of a data element is classified as one or more of the types of data at block 604 such as the types of data described above. Next, related operations that may use the types of data identified in the web page are determined at block 606. For example related operations related to a data type "destination" can include any of the following:
look up weather in the destination;
look up hotels and/or restaurants in the destination;
look up hotel and/or restaurant reviews in the destination;
look up the history of the destination;
search the user's PIM to identify friends and business contacts in the destination;
look up current events (e.g. sporting events, opera, and cultural events) in the destination;
look up current local news in the destination;
look up mass transit systems (e.g. subway) in the destination; and
look up currency exchange rates between origin and destination;

Examples of related operations related to a data type "address" can include any of the following:
save the address into a PIM;
look up phone number of the address;
look up a map and/or directions to the address;
look up points of interest near by the address; and
look up proximity of the address to major landmarks (e.g. airport, shopping mall, etc);

Examples of related operations related to a data type "phone number" can include any of the following:
activate an application to dial the phone number,
look up the phone number in a reverse directory to obtain driving directions or map to that location; and
save the phone number into a PIM;

Examples of related operations related to a data type "person" can include any of the following:
save "person" to my PIM;
activate an application to call "person" on the phone; and
search for "person" in the news story archive.

In one embodiment, for each data type identified in the current web page, e.g., person, a well-defined chunk of data is extracted from the page. This data is the instance of the data type, and contains the information particular to that data type. For example, if the page contains a data type "person", and if the data type person is defined to contain a name, address and phone number, then the name, address and phone number information is extracted from the displayed web page.

The above examples are illustrative only; many other related operations that depend on the information or operation desired by the user, a service provider, or web page operator can also be included in the related operations listed above. The order of the related operations can also vary according to the preferences of the user or the service provider or the web page operator. It is possible to have any number of related operations for each data type. A related operation can also include a single web page that provides numerous applications. Alternatively, a related operation can also include a URL that initiates an application.

The set of related operations that correspond to each data type can vary based upon a preference, such as a user preference. The preference can be based upon a user's history, or profile or manually selected preference. For example, if the user has a stored history of purchasing tickets to attend the local motor sports events when he travels, one of the related operations may be a link to information related to motor sports in the destination city. The preference can alternatively be based upon a web page owner/operator's options or selection or based on a related operations service provider's options and preferences. In one embodiment, the database can also be individually assigned to one of, or combinations of the user, a web page operator and a service provider who provides the related operations services. In an alternative embodiment, multiple databases of related operations can be used, where each database is assigned to a user, a web page operator and a service provider. The database of related operations can also be automatically updated over time.

In one embodiment, at least one of the related operations is promoted over the other, non-promoted related operations. For an example, a travel web page operator may desire that, after a user has booked airline tickets, the user also book a hotel reservation. Therefore, a hotel booking related operation is promoted in some manner. Examples of promoting include use of banner ads, inverse print, flashing print, different color, elevate the related operation to the top of the list of related operations, etc. Promoting can include anything to make the promoted operation stand out from the other, non-promoted operations.

For another example, the user's Internet service provider (ISP) may promote or otherwise customize the choice(s) of related operation(s). For another example, the ISP or the web page operator can promote their choice of related operation due to advertising reasons, such as the promoted travel web page pays the ISP or web page operator a commission or other compensation scheme.

Referring back to Fig. 6, the related operations are output to the user at block 608 as described above. Outputting the related operations can include transferring the related operations to the user's web page viewing device (user terminal) or other user interfaces known to one skilled in the art. The instance of data related to the related operation is then extracted at block 610.

The user then selects one of the related operations (a selected operation) through the user terminal, and the selection of the selected relation is received at block 612. Selecting the related operation causes the extracted data to be sent to the application implementing the related operation at block 614. For example, if the user selects the hotel booking related operation, then the names of the travelers, the dates, payment method, and the destination cities, is automatically output to the hotel booking application. This technique substantially reduces the data entry and reentry required of the user. The hotel booking application, for example, then processes the output data at block 616 to complete the hotel booking process (e.g. search for hotel rooms, make reservations, send confirmation to user, etc.). The use of related operations also reduces the navigational distance between the cooperating applications, e.g., locate the most useful applications the fewest keystrokes from where the user needs them. Note that the operations of Fig. 6 are not required to be performed in the order illustrated, and that all the processing represented by the blocks may not be necessary to practice the invention.

In one embodiment, the related operations are specified in a database of related operations. A network service provider can also provide the database of related operations. The database network service includes a large database containing a mapping from data type, T, to a set of related operations (URLs). A network operator such as an ISP or a web page provider operates the database network service. This allows the database operator to configure and manage the set of related operations for any given data type. For example, the operator may want to sell the top position in the list of related operations for the related operation of "lookup city weather".

The selection of related operations can also be personalized to the needs and characteristics of the user. For example, if the user is known to prefer Japanese language, it is not very useful to return a list of related operations that includes Danish language webpages and applications, therefore the list of related operations would include Japanese language webpages and applications.

The database of related operations can be personalized, allowing the operations returned for a given user to be customized to the user's needs or history. For example, the user may be able to manually set preferences indicating that the user prefers one "weather site" rather than another weather site. Or the user's default language preferences may be taken into account when selecting the service to perform the given operation.

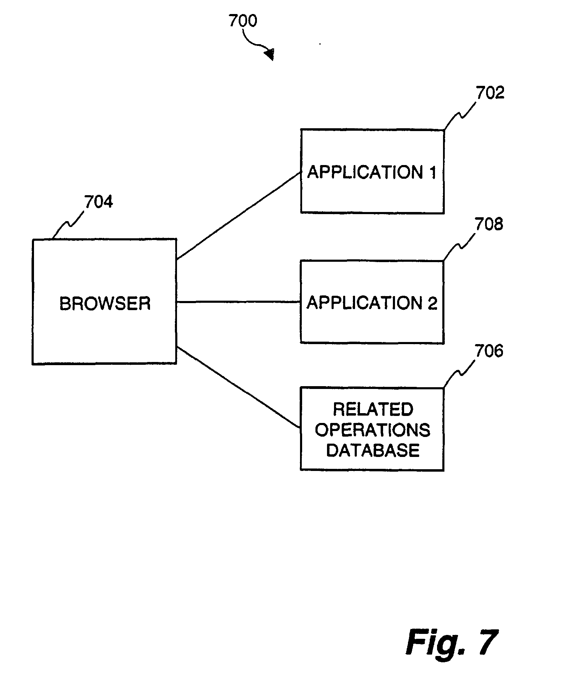

Fig. 7 illustrates one embodiment 700 of elements used to generate a related operation identified by a URL (e.g., the related operation is a web service or application). The user browses (e.g. views web pages, email, Internet content, etc.) with a first application 702. The browser application 704 classifies the data types contained in the web page being viewed. Next, the related operations are retrieved from a related operations database 706. The browser 704 then extracts the data associated with each data type in the viewed web page. A user selects or invokes one of the related operations e.g. a second application 708. The data from each data type to be used in the second application 708 is output from the first application 702 to the second application 708 for processing.

In one embodiment, a database of data types is built and maintained at a central location for all webpage developers and operators to use. One embodiment of data types are commonly occurring data elements in wireless or other Internet services, that have a predictable format or for which there exist a predictable subset of information, for example: a location, a city, a phone number, an address, or an airline flight.

The information contained within a given data type can be expressed in any of a large number of formats, including printed documentation, a schema language (e.g., Xschema) or any number of other computer comprehensible formats.

The database of data types could be maintained by operators, or even by a central authority. Access to the database could also be exchanged for a fee. In another embodiment, the database can be distributed to individual operator networks (e.g. pushed) to improve performance and reliability. For example, for a "phone number" data type, there might exist operations to perform a reverse lookup on a phone number, add the phone number to a PIM, etc.

In one embodiment each user could be assigned a set of services (web servers, identified by a URL), which are associated with each related operation of each data type. So, for any "get weather for a location" operation, there will be a weather service webpage or application that returns the weather information for a given location. The location data instance is extracted and output to the service, as defined by the related operations database.

The related operations database could also include a set of URLs for each data type. Each URL represents one webpage that implements an operation relating to that data type, T. For example, for the type "phone number", there might be URLs to do a reverse lookup on the phone number, add the phone number of a PIM, etc. For an alternative embodiment, each webpage or application can also include the name of the webpage, the webpage owner, and any other information necessary to make the system manageable.

The classification of various data types contained in a page or deck can be accomplished in several ways. For one embodiment, explicit tagging can be used. For example meta-data can be added to the page by the page author, indicating that the page contains specific data types (e.g., person, location, ...). As in the following example:

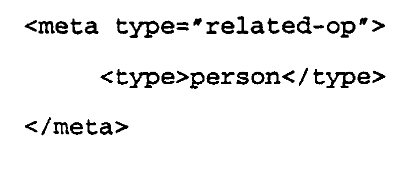

In another embodiment, implicit classification is used. For implicit classification the browser or another network server (proxy) scans the page for information. The classification can be based upon any of a variety of algorithms. For example, it is fairly simple to scan for phone numbers based on regular-expression syntax. Each data instance such as every word, number, patterns of words (e.g. addresses), etc. is compared to the database of known data types.

In another embodiment, a hybrid of both explicit and implicit classification mechanisms can be used together. For example, explicit key wording may assist a heuristics-based algorithm.

Referring back to Figs. 3 and 6, the classification of the various types of data in a webpage, block 604, can be accomplished by the web browser application in the user terminal 301. For an alternate embodiment a network server 316, 320, or network proxy 308 may perform the classification. For example: a network server 316, 320 may perform implicit classification on behalf of the user by periodically searching the Internet for webpages, and building a classification database. Alternatively, a network proxy 308 could perform classification analysis upon all webpage content that is requested by the browser application in the user terminal 301, and annotate the webpage content with explicit "related operations" URLs as one example of a hybrid approach.

Data extraction, block 610, of Fig. 6, i.e., the extraction of the information necessary to perform a related operation, can be accomplished in several ways. In one embodiment having explicit tagging, the source application can explicitly encode the data into the web page by using meta-data tags. This is similar to explicit classification, except that more information is provided. For example:

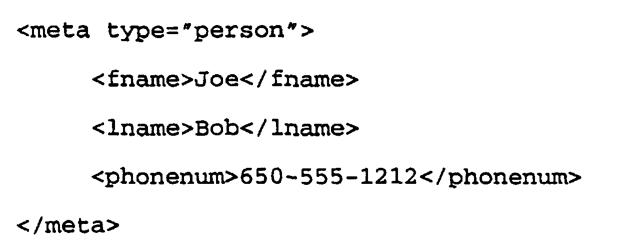

In an alternate embodiment having implicit extraction, a variety of heuristics-based approaches can be used. For another alternate embodiment the variety of heuristics-based approaches can be used in conjunction with the classification algorithm, to determine the data embedded in a page. Either embodiment of data extraction can be performed by either the browser in the user terminal 301 or by a network server 316, 320 or network proxy 308.

In one embodiment, a special mechanism (UI) is built into the user terminal 301 that recognizes all situations in which the related operations are present. The related operations can be recognized either by explicit tags or by a built-in browser function that notices situations where related operations are present. This presents the user with the option of invoking a related operation. For example: a menu of the related operations could be provided in the browser application in a standard location.

One alternative embodiment is optimized for a wireless network or other network having a limited bandwidth and limited device resources. Other alternative embodiments are optimized for use in more sophisticated devices (e.g., PCs) or for networks not having the guaranteed presence of a proxy/gateway.

For one embodiment, the browser implements a meta-data mechanism allowing a network server 316, 320, or network proxy 308 (e.g. gateway) to annotate a page with a link (URL) that points to the related operations for this page. For example, it might be an HTTP header:

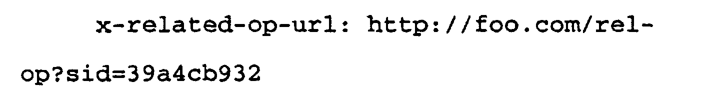

This could also be implemented as a markup language tag, e.g.,

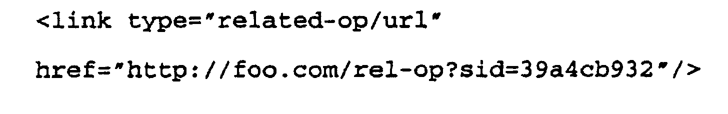

When the browser application in the user terminal 301 obtains content that has a related operations link associated with the content, the browser 301 presents a special UI to the user, allowing the user to invoke the related operations URL. A network proxy 308, acting on behalf of the browser 301, scans all incoming content for related operations. Scanning can use either explicit or implicit algorithms, or combinations of both. User personalization and service provider business rules can also be taken into account. Whenever one more related operations are found in a page, the following occurs:

The proxy 308 creates a "related operations session". The related operations session includes a persistent database entry with the classification types, extracted data, and URLs of the services providing the related operations. The session has a unique identifier, e.g., 39a4cb932. The session will have a lifetime sufficient to serve the needs of the user, but will eventually be removed.

The content is annotated with the related operation meta-data, which points back at the session information.

If the user invokes the "related operation" link in the content, the URL is requested. This URL points back at the scanning proxy, and includes enough information to identify the "related operation session". When invoked, this URL returns a markup language deck listing all related operations, and containing enough information to invoke the related operations. For example:

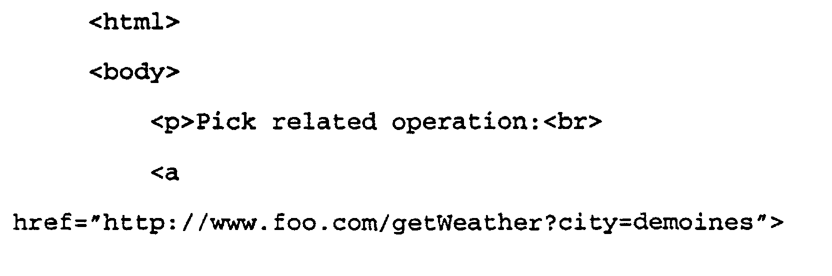

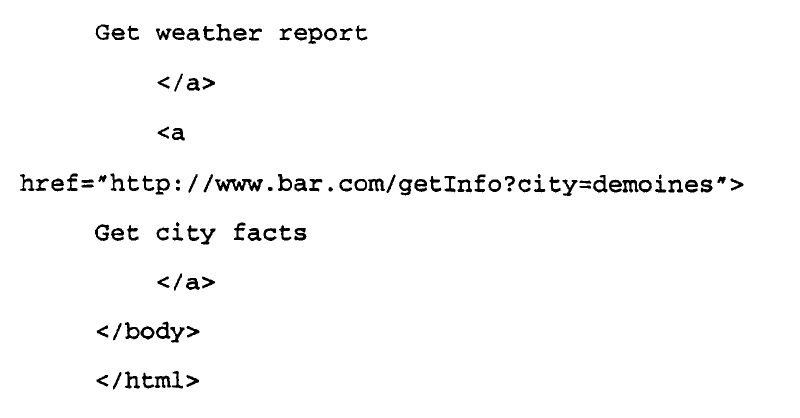

The above-described embodiment is optimized for minimal network usage and simple browser implementation. Alternative embodiments might operate differently. For example on faster networks, with more user terminal 301 power, the scanning and classification could be performed by the browser application in the user terminal 301, rather than in a network proxy 308. A network server 316, 320 would contain a database of all data types, related operations and services performing those related operations. The selection of an appropriate service would occur within the browser application in the user terminal 301. A smarter browser application in the user terminal 301 could perform the classification of data and data extraction, but leave the selection of operations to a network server 316, 320. A list of related operations could be returned in a custom extensible mark-up language (XML) format, and the browser application would present the list of related operations in a user interface format suitable for the user interface and operating system of the user terminal 301.

Given this description, one skilled in the art will readily appreciate that the described techniques can be practiced with other computer system configurations, including multiprocessor systems, minicomputers, mainframe computers, and the like. It will also be appreciated that any of a variety of programming languages may be used to implement the embodiments as described herein. Furthermore, it is common in the art to speak of software, in one form or another (e.g., program, procedure, process, application, module, logic...), as taking an action or causing a result. Such expressions are merely a shorthand way of saying that execution of the software by a computer causes the processor of the computer to perform an action or produce a result. It will also be appreciated that the above-described processes can be implemented in software or hardwired in a computer system or combinations thereof. Therefore, the description of any of the embodiments described herein is not limited to any particular combination of hardware and/or software.

In the foregoing specification, the invention has been described with reference to specific exemplary embodiments thereof. It will be appreciated that various modifications may be made thereto without departing from the broader spirit and scope of the invention as set forth in the following claims. The specification and drawings are, accordingly, to be regarded in an illustrative sense rather than a restrictive sense.

## Claims

1. A method of processing a web page comprising:
receiving a web page, wherein the web page includes a plurality of data elements and wherein each one of the plurality of data elements is at least one of a plurality of known data types;
classifying each one of the plurality of data elements ;
determining a plurality of related operations for each one of the plurality of classified data elements ; and
outputting the plurality of related operations.

2. The method of claim 1, wherein outputting the plurality of related operations includes promoting at least one of the plurality of related operations.

3. The method of claim 2, wherein promoting at least one of the plurality of related operations comprises:
selecting one of the pluralities of related operations;
displaying the selected one of the plurality of related operations in a first mode; and
displaying the unselected ones of the plurality of related operations in a second mode.

4. The method of claim 2, wherein promoting at least one of the plurality of related operations comprises:
selecting at least one of the pluralities of related operations wherein the selection is determined by a preference.

5. The method of claim 4, wherein the preference comprises a user profile.

6. The method of claim 4, wherein the preference comprises a service provider preference.

7. The method of claim 4, wherein the preference comprises a financial incentive.

8. The method of claim 1, further comprising:
extracting data from each one of the plurality of classified data elements ;
receiving a selection of one of the plurality of related operations;
outputting the extracted data corresponding to the selected one of the plurality of related operations; and
processing the extracted data in the selected one of the plurality of related operations.

9. The method of claim 1, wherein the method is executed on a user terminal.

10. The method of claim 1, wherein the method is executed on a server.

11. The method of claim 1, wherein the method is executed on a server and a user terminal.

12. A method of processing a web page comprising:
receiving a web page in a server, wherein the web page includes a plurality of data elements and where in each one of the plurality of data elements is at least one of a plurality of known data types; data elements;
classifying each one of the plurality of data elements ;
determining a plurality of related operations for each one of the plurality of classified data elements;
outputting a plurality of related operations through a wireless data link to a wireless user terminal;
extracting data from each one of the plurality of classified data elements ;
receiving a selection of one of the plurality of related operations;
outputting the extracted data corresponding to the selected one of the plurality of related operations; and
processing the extracted data in the selected one of the plurality of related operations.

13. A system for processing a web page comprising:
a processor;
a storage facility coupled to the processor and containing instructions executable by the processor which configure the processing system to
receive a web page, wherein the web page includes a plurality of data elements and where in each one of the plurality of data elements is at least one of a plurality of known data types;
classify each one of the pluralities of data elements;
determine a plurality of related operations for each one of the plurality of classified data elements ; and
output the plurality of related operations.

14. The system of claim 13, further comprising a user terminal coupled to the processor and wherein the instructions executable by the processor further configure the processing system to determine a plurality of related operations for each one of the plurality of classified data elements and output the plurality of related operations to a user terminal.

15. The system of claim 14, wherein the processor is coupled to the user terminal via a network.

16. The system of claim 15, wherein the network includes at least one of a group consisting of a wireless application protocol (WAP), an Internet, an intranet, a local area network (LAN) and a wide area network (WAN).

17. The system of claim 15, wherein the user terminal includes at least one of a group consisting of a personal digital assistant (PDA), a telephone, a cellular telephone, a two-way pager, a computer, a website, and a server.

18. A machine-readable program storage medium tangibly embodying a sequence of instructions executable by a machine to perform a method comprising:
receive a web page, wherein the web page includes a plurality of data elements and wherein each one of the plurality of data elements is at least one of a plurality of known data types;
classify each one of the plurality of data elements ; and
determine a plurality of related operations for each one of the plurality of classified data elements .

19. The machine-readable program storage medium of claim 18, further comprising:
outputting a plurality of related operations.

20. The machine-readable program storage medium of claim 19, wherein outputting the plurality of related operations includes promoting at least one of the plurality of related operations.

21. The machine-readable program storage medium of claim 20, wherein promoting at least one of the plurality of related operations comprises:
selecting one of the pluralities of related operations;
displaying the selected one of the plurality of related operations in a first mode; and
displaying the unselected ones of the plurality of related operations in a second mode.

22. The machine-readable program storage medium of claim 20, wherein promoting at least one of the plurality of related operations comprises:
selecting at least one of the pluralities of related operations wherein the selection is determined by a preference.

23. The machine-readable program storage medium of claim 22, wherein the preference comprises a user profile.

24. The machine-readable program storage medium of claim 22, wherein the preference comprises a service provider preference.

25. The machine-readable program storage medium of claim 22, wherein the preference comprises a financial incentive.

26. The machine-readable program storage medium of claim 19, further comprising:
extracting data from each one of the plurality of classified data elements ;
receiving a selection of one of the plurality of related operations;
outputting the extracted data corresponding to the selected one of the plurality of related operations; and
processing the extracted data in the selected one of the plurality of related operations.

27. The machine-readable program storage medium of claim 18, wherein the method is executed on a user terminal.

28. The machine-readable program storage medium of claim 18, wherein the method is executed on a server.

29. The machine-readable program storage medium of claim 18, wherein the method s executed on a server and a user terminal.

30. An apparatus for processing a web page comprising:
means for receiving a web page, wherein the web page includes a plurality of data elements and wherein each one of the plurality of data elements is at least one of a plurality of known data types;
means for classifying each one of the plurality of data elements ;
means for determining a plurality of related operations for each one of the plurality of classified data elements ; and
means for outputting the plurality of related operations.

31. The apparatus of claim 30, wherein the means for outputting the plurality of related operations includes means for promoting at least one of the plurality of related operations.

32. The apparatus of claim 31, wherein the means for promoting at least one of the plurality of related operations comprises:
means for selecting one of the pluralities of related operations;
means for displaying the selected one of the plurality of related operations in a first mode; and
means for displaying the unselected ones of the plurality of related operations in a second mode.

33. The apparatus of claim 2, wherein the means for promoting at least one of the plurality of related operations comprises:
means for selecting at least one of the pluralities of related operations wherein the selection is determined by a preference.

34. The apparatus of claim 33, wherein the preference comprises a user profile.

35. The apparatus of claim 33, wherein the preference comprises a service provider preference.

36. The apparatus of claim 33, wherein the preference comprises a financial incentive.

37. The apparatus of claim 30, further comprising:
means for extracting data from each one of the plurality of classified data elements;
means for receiving a selection of one of the plurality of related operations;
means for outputting the extracted data corresponding to the selected one of the plurality of related operations; and
means for processing the extracted data in the selected one of the plurality of related operations.
